# EUROPÄISCHE PATENTSCHRIFT

(11) **EP 1 557 651 B1**
(45) Veröffentlichungstag und Bekanntmachung des Hinweises auf die Patenterteilung: **10.01.2018**
(21) Anmeldenummer: 04026360.0
(22) Anmeldetag: 05.11.2004
(51) Int. Cl.: G01F 23/292, A47L 15/42, D06F 39/08

(54) **Vorrichtung und Verfahren zur Niveauüberwachung in einem flüssigkeitsführenden Haushaltsgerät**
Device and method for level monitoring in a Household appliance conveying liquid
Dispositif et méthode de contrôle du niveau d'un liquide contenu dans un appareil électroménager

(30) Priorität: 21.01.2004 DE 102004003077
(43) Veröffentlichungstag der Anmeldung: 27.07.2005
(73) Patentinhaber: Electrolux Home Products Corporation N.V., 1130 Brussels (BE)
(72) Erfinder: Steiner, Winfried, 90491 Nürnberg (DE); Stahlmann, Rolf, 91639 Wolframs-Eschenbach (DE); Füglein, Stefan, 90427 Nürnberg (DE); Forst, Klaus-Martin, 90513 Zirndorf (DE); Daume, Christian, 90559 Burgthann (DE)
(74) Vertreter: Electrolux Group Patents

(56) Entgegenhaltungen:
- EP-A- 1 336 369
- WO-A-92/09017
- FR-A- 1 538 655
- US-A- 3 648 521
- PATENT ABSTRACTS OF JAPAN Bd. 009, Nr. 151 (P-367), 26. Juni 1985 (1985-06-26) -& JP 60 027819 A (YAMATAKE HONEYWELL KK), 12. Februar 1985 (1985-02-12)

## Beschreibung

Die Erfindung betrifft eine Vorrichtung zur Überwachung wenigstens eines Flüssigkeitsniveaus in einem flüssigkeitsführenden Haushaltsgerät gemäß dem Oberbegriff des Patentanspruches 1 sowie ein Verfahren zur Niveauüberwachung gemäß dem Oberbegriff des Patentanspruches 19.

Ein flüssigkeitsführendes Haushaltsgerät dieser Art umfasst in der Regel einen Arbeitsbereich, eine Haushaltsgeschirrspülmaschine beispielsweise einen Spülbehälter, in dem zu reinigendes Geschirr mit im Haushaltsgerät umgewälzter Arbeitsflüssigkeit in Kontakt gebracht wird, und einen Gerätesumpf in dem sich die Arbeitsflüssigkeit sammelt, bevor sie erneut durch das Haushaltsgerät gefördert oder aus dem Haushaltgerät abgeführt wird. Um zu verhindern, dass feste Bestandteile aus der Arbeitsflüssigkeit, wie sie beispielsweise beim Spülvorgang in einer Geschirrspülmaschine auftreten, in den Gerätesumpf gelangen, ist dem Arbeitsbereich normalerweise ein Siebsystem nachgeordnet, an dem die festen Bestandteile der Verunreinigungen aus der umgewälzten Arbeitsflüssigkeit abgeschieden werden.

Für eine optimale Funktion des Haushaltsgeräts ist die Menge der im Gerät umgewälzten Arbeitsflüssigkeit in einem vorgegeben Bereich einzustellen, was in der Regel über das Arbeitsflüssigkeitsniveau im Gerätesumpf erfolgt. Dabei sollte möglichst ein maximales bzw. ein minimales Arbeitsflüssigkeitsniveau im Gerätesumpf nicht überschritten bzw. unterschritten werden. Ein zu niedriges Niveau der Arbeitsflüssigkeit im Gerätesumpf beispielsweise kann unter anderem eine Verringerung der hydraulischen Leistung der Umwälzpumpe und ein schlechtes Reinigungsergebnis zur Folge haben. Ein maximales Arbeitsniveau im Gerätesumpf bzw. eine maximale Menge an Arbeitsflüssigkeit im Gerät sollte nicht überschritten werden, um zum Beispiel den Wasserverbrauch gering zu halten und eine reibungslose Funktion des Siebsystems zu ermöglichen.

Aus EP 0 546 434 A1 ist eine Niveausteuerung für den Flüssigkeitsstand in einer Geschirrspülmaschine mit einer unter dem Boden des Spülbehälters angeordneten Ablaufwanne, der eine Siebanordnung zugeordnet ist, bekannt. Die Siebanordnung ist wenigstens teilweise am Boden des Spülbehälters angeordnet. An die Ablaufwanne ist über eine Absaugöffnung eine programmgesteuerte Umwälzpumpe für die Flüssigkeit angeschlossen. Über ein Zulaufventil kann bei laufender Umwälzpumpe im Bedarfsfall Wasser in den Spülbehälter oder auch in die Ablaufwanne zugeführt werden. Sinkt das Niveau der Arbeitsflüssigkeit in der Ablaufwanne unter das minimale Arbeitsniveau wird das Zulaufventil geöffnet und solange Wasser zugeführt, bis das obere Arbeitsniveau erreicht ist. Die Bestimmung des Arbeitsniveaus erfolgt mittels eines Niveausensors an der Ablaufwanne. Der Niveausensor umfasst eine in der Seitenwand der Ablaufwanne angeordnete Luftfallenkammer, die unterhalb des minimalen Arbeitsniveaus offen ist und an die ein Druckschalter angeschlossen ist, dessen Schalteinrichtung mit dem Wasserzulaufventil gekoppelt ist.

Der in EP 0 546 434 A1 beschriebene Niveausensor mit Luftfallenkammer und Druckschalter weist jedoch eine relativ hohe Schalthysterese und relativ große Systemtoleranzen auf, so dass die Genauigkeit der Messung beschränkt ist. Wird der Rückschaltpunkt des Niveausensors verwendet, um eine Entleerung der Ablaufwanne zu kontrollieren, so ist das überwachte Niveau in der Regel zu hoch, um eine vollständige Entleerung anzuzeigen. Ferner sind die mechanischen Komponenten des Druckschalters Verschleiß unterworfen, was sich mit der Zeit ebenfalls negativ auf die Messgenauigkeit auswirken kann.

Eine größere Messgenauigkeit und Zuverlässigkeit lässt sich beispielsweise mit einem optischen Niveausensor erreichen. In WO 01/22862 A1 ist ein wasserführendes Haushaltsgerät offenbart, in dessen Flüssigkeitsbehälter wenigstens ein Sicherheitsniveau von einer Sicherheitsvorrichtung erfasst wird, die als optisches Lichtleitsystem zur Reflektion eines Lichtstrahls ausgebildet ist. Der Füllstand wird anhand einer Änderung des Reflektionsverhaltens an mindestens einer reflektierenden Stelle erfasst und zum Beispiel zur Überwachung einer vollständigen Leerung des Behälters, eines vorgegebenen Arbeitsniveaus und eines maximalen Füllniveaus benutzt. Das optische Lichtleitsystem umfasst dazu einen Tauchstab, der auf dem Boden des Behälters aufsetzbar ist, sowie zwei an diesem angeordnete, prismaförmige Reflektionskörper zur Überwachung der Füllniveaus und vorzugsweise zwei optische Sensoren, die an den Prismakörpern angebracht sind.

Ist im Umwälzkreis des Haushaltsgeräts zwischen dem Spülbehälter und dem Gerätesumpf ein Siebsystem vorgesehen, wie bei der in EP 0 546 434 A1 beschriebenen Geschirrspülmaschine, so kann sich durch zunehmende Beladung des Siebsystems mit den aus der Arbeitsflüssigkeit zurückgehaltenen Verunreinigungen, die Durchströmbarkeit der Siebe verschlechtern. Das führt dann dazu, dass sich immer mehr Arbeitsflüssigkeit vor dem Siebsystem anstaut und demzufolge des Niveau der Arbeitsflüssigkeit im Gerätesumpf bzw. in der Ablaufwanne absinkt. Bei einer sehr hohen Siebbeladung dringt schließlich kaum noch Wasser durch das Sieb.

Wird das Arbeitsniveau im Gerätesumpf bzw. in der Ablaufwanne bestimmt, so wird bei einem durch beladene Siebe verursachten Arbeitsflüssigkeitsmangel im Gerätesumpf ein Flüssigkeitszulauf in das Haushaltsgerät ausgelöst, bis ein vorgegebenes oberes Arbeitsniveau erreicht ist, obwohl theoretisch genügend Arbeitsflüssigkeit im Umwälzkreis vorhanden wäre. Das kann einen erhöhten Flüssigkeitsverbrauch, bei sehr stark verschmutzten Sieben sogar eine Überfüllung des Haushaltsgeräts, zur Folge haben.

Aus der EP 1 336 2369 A1 ist eine programmgesteuerte Geschirrspülmaschine mit einer Überlaufsicherung bekannt. In einem Sprüharm-Zuflussrohr ist ein optischer Flüssigkeitssensor als Überlauf-Sicherheitseinrichtung für den Spülbehälter vorgesehen. Der Flüssigkeitssensor umfasst einen Lichtsender, Lichtempfänger und transparenten, prismatischen Reflexionskörper. Der Reflexionskörper ist in Höhe des Sicherheitsniveaus für den Spülbehälter angeordnet. Das Sprüharm-Zuflussrohr wirkt bei ausgeschalteter Pumpe somit als kommunizierende Röhre. Am Boden des Spülbehälters ist ein Siebsystem vorgesehen.

In der WO 92/09017 A1 ist eine Vorrichtung zum Behandeln von Gegenständen mit einer Flüssigkeit beschrieben. Der Transport der Flüssigkeit wird mit Ventilen und optischen Sensoren gesteuert. Die optischen Sensoren umfassen Lichtquellen, Lichtleiter und Detektoren. Es sind mehrere Kammern und Bereiche vorgesehen, in denen der Flüssigkeitsstand und/oder die Anwesenheit der Flüssigkeit erfasst werden.

Aus der JP 60 027819 A ist eine Niveauanzeige für einen Flüssigkeitsspiegel bekannt. Ein Lichtleiter umschließt einen langgestreckten Kern, der eine Vielzahl Rillen entlang seiner Längsrichtung aufweist. Ein Mantel umschließt wiederum den Kern mit dem Lichtleiter. An einem oberen Ende des Lichtleiters befindet sich eine Lichtquelle und eine Detektor. Der Mantel umfasst Vorsprünge, die komplementär zu den Rillen sind. Durch das Eintauchen in Flüssigkeit werden die Vorsprünge in die Rillen gedrückt und der Lichtleiter deformiert. Das Niveau des Flüssigkeitsspiegels beeinflusst somit die optischen Eigenschaften des Lichtleiters, die vom Detektor erfasst werden.

In der US 3,648,521 ist eine Anzeigevorrichtung für das Niveau eines Flüssigkeitsspiegels in einem Flüssigkeitsbehälter beschrieben. Ein beleuchteter und mit Farbfilterelementen versehener transparenter Körper dringt in die Flüssigkeit ein. Verschiedene Niveaus des Flüssigkeitsspiegels bewirken unterschiedliche farbliche Effekte,

Aus der FR 1 538 655 A ist ein Flüssigkeitsbehälter für eine Geschirrspülmaschine bekannt. Der Flüssigkeitsbehälter weist ein Verschlusselement mit einem transparenten Kegel auf, der vertikal in die Flüssigkeit eindringt. Das Niveau des Flüssigkeitsspiegels in dem Flüssigkeitsbehälter ist durch Betrachten des Verschlusselements von außen erkennbar.

Es ist nun Aufgabe der Erfindung, eine geeignete Vorrichtung und ein Verfahren zur Niveauüberwachung in einem flüssigkeitsführenden Haushaltsgerät bereitzustellen, die die vorgenannten Nachteile beim Stand der Technik wenigstens teilweise überwinden oder zumindest vermindern.

Diese Aufgabe wird hinsichtlich der Vorrichtung zur Überwachung wenigstens eines Flüssigkeitsniveaus in einem flüssigkeitsführenden Haushaltsgerät mit den Merkmalen des Patentanspruchs 1 und hinsichtlich des Verfahrens zur Niveauüberwachung in einem flüssigkeitsführenden Haushaltsgerät mit den Merkmalen des Patentanspruchs 19 gelöst. Vorteilhafte Ausgestaltungen und Weiterbildungen ergeben sich aus den von Anspruch 1 bzw. Anspruch 19 jeweils abhängigen Ansprüchen.

Erfingdungsgemäß ist vorgesehen, dass die optische Niveaumesseinrichtung wenigstens einen Lichtleiter und wenigstens eine Lichtquelle und wenigstens einen Lichtempfänger umfasst, wobei die optische Niveaumesseinrichtung teilweise in Umwälzrichtung vor dem Siebsystem und teilweise in Umwälzrichtung nach dem Siebsystem angeordnet ist, und wobei die optische Niveaumesseinrichtung durch das Siebsystem durchgeführt ist.

Mit dem Begriff optische Niveaumesseinrichtung sind die Teile der Vorrichtung zur Überwachung wenigstens eines Flüssigkeitsniveaus bzw. Flüssigkeitsstands oder -pegels bezeichnet, die zur Detektion des Flüssigkeitsstands verwendet werden. Einrichtungen zur Energieversorgung oder Signalübertragung, zum Beispiel zu einer Auswerteneinheit oder Anzeigeeinheit, die ebenfalls Teil der Vorrichtung sein können, sind von dem Begriff optische Niveaumesseinrichtung nicht umfasst.

Die Umwälzrichtung der Arbeitsflüssigkeit ist die Hauptströmungsrichtung der während des Betriebs durch das Haushaltsgerät geförderten Flüssigkeit. Die Angabe in Umwälzrichtung vor dem Siebsystem bzw. nach dem Siebsystem wird daher im Folgenden auch mit in Strömungsrichtung vor dem Siebsystem bzw, in Strömungsrichtung nach dem Siebsystem (oder einfach: vor dem Siebsystem bzw. nach dem Siebsystem) umschrieben. Die Angabe in Umwälzrichtung vor dem Siebsystem bzw. nach dem Siebsystem bezieht sich jeweils auf den entsprechenden an das Siebsystem angrenzenden Bereich im Umwälzkreis vor oder nach dem Siebsystem, der beispielsweise durch einen an das Siebsystem angrenzenden oder dieses aufnehmende Behälter (z.B. Spülbehälter, Ablaufwanne) oder Behälterbereich gebildet werden kann.

Ein der Erfindung zugrundeliegender Gedanke ist also, die Vorteile einer optischen Niveaumesseinrichtung zu nutzen und durch den Einsatz einer geeigneten optischen Niveaumesseinrichtung Flüssigkeitsniveaus vor und nach dem Siebsystem zu erfassen, um so Störgrößen wie zum Beispiel eine kritische Siebbeladung besser zu kontrollieren und die im jeweiligen Fall vorteilhaftesten Maßnahmen zur Beseitigung der Störung einleiten zu können.

Die Vorrichtung gemäß der Erfindung umfasst dazu wenigstens eine - im Idealfall nur eine einzige - optische Niveaumesseinrichtung, mit der sich mehrere Flüssigkeitsniveaus detektieren lassen. Mit Hilfe des entsprechend ausgeführten und angeordneten optischen Niveaumesseinrichtung lassen sich dann beispielsweise in Umwälzrichtung nach dem Siebsystem ein minimales und ein maximales Arbeitsflüssigkeitsniveau sowie gegebenenfalls eine vollständige Entleerung und gleichzeitig vor dem Siebsystem wenigstens ein vorgegebenes Sicherheitsniveau der Arbeitsflüssigkeit erfassen.

Der Hauptvorteil der Vorrichtung gemäß der Erfindung ist, dass eine kritische Siebbeladung rechtzeitig erkannt werden kann, so dass ein Überfüllen des Gerätes durch diese Störgröße im Wesentlichen ausgeschlossen ist und zudem Wasser gespart werden kann. Sobald der Flüssigkeitstand vor dem Sieb einen vorgegebenen maximalen Wert überschritten hat, können Maßnahmen eingeleitet werden, die zu einer Reduzierung der Siebbeladung führen. Diese können beispielsweise ein Rückspülen der Siebe oder eine Aufforderung für eine manuelle Reinigung des Siebsystems über eine Anzeige umfassen.

Darüber hinaus lässt sich mit Hilfe der Vorrichtung eine optimale Niveausteuerung realisieren. Auf relativ kostengünstige Weise werden alle wichtigen Flüssigkeitsstände im Haushaltsgerät erfasst, die dann zur Steuerung und Regelung des Wasch- bzw. Spülprozesses genutzt werden können.

Die Vorrichtung gemäß der Erfindung kann auch mehrere optische Niveaumesseinrichtungen umfassen. So kann beispielsweise eine separate optische Niveaumesseinrichtung zur Überwachung einer vollständigen Entleerung oder anderer Füllstände im Haushaltsgerät, beispielsweise als Überfüllsicherung, vorgesehen sein. Besonders bevorzugt ist es jedoch, auch aus Kostengründen, wenn sich möglichst viele Füllniveaus mit nur einer Niveaumesseinrichtung bestimmen bzw, überwachen lassen.

Bei der Vorrichtung gemäß der Erfindung umfasst die optische Niveaumesseinrichtung wenigstens einen Lichtleiter und wenigstens eine Lichtquelle und wenigstens einen Lichtempfänger.

Bei Befolgen der Regeln von lichtleitenden Elementen, ist die Anzahl und die Höhe der detektierbaren Niveaus frei wählbar. So ist es möglich ein oder mehrere Füllniveaus unabhängig voneinander zu detektieren.

Das in den Lichtleiter eingestrahlte Licht kann von der Außenwand des Lichtleiters nahezu vollständig reflektiert werden, solange der Lichtleiter von Luft oder Gasen umgeben ist. Kommt Flüssigkeit in Kontakt mit dem Lichtleiter, ändert sich der Brechungswinkel des Lichts (das Licht wird dann vorzugsweise in die Flüssigkeit abgelenkt) und damit auch die von dem Empfänger detektierte Lichtintensität. Durch eine geeignete geometrische Ausführung des Lichtleiters wird erreicht, dass sich von einer Lichtquelle eingestrahltes Licht so im Lichtleiter fortbewegt, dass es an mehreren Stellen an der Außenwand des Lichtleiters reflektiert bzw. gebrochen werden kann. Jede dieser Stellen bzw. Bereiche an denen Licht gebrochen wird lässt sich dann einem Füllniveau zuordnen. Über die Intensität des in den jeweiligen Bereichen reflektierten Lichts oder über die gesamte zurückgestrahlte Lichtintensität können dann die vorgegebenen Füllniveaus überwacht werden. Da sich eine Veränderung der eingestrahlten Lichtintensität auch bestimmen lässt, wenn keine durchgängige Flüssigkeitssäule den Lichtleiter umgibt, ist es möglich mit einem einzigen Lichtleiter sowohl das Flüssigkeitsniveau vor dem Siebsystem im Umwälzkreis des Haushaltsgeräts als auch das Flüssigkeitsniveau nach dem Siebsystem zu bestimmen.

Ein weiterer Vorteil beim Einsatz von Lichtleitern ist, dass die Hysterese in sehr kleinen Bereichen gehalten werden kann (< 0,2 mbar). Des Weiteren ist die Anbindung der im Spülbehälter angeordneten optischen Niveaumesseinrichtung, beispielsweise an eine Auswerteeinheit, sehr einfach zu realisieren. Der Einsatz einer solchen optischen Niveaumesseinrichtung kann daher gegenüber anderen Sensoren sehr kostengünstig erfolgen, besonders dann, wenn keine weiteren Sensoren zur Füllstandmessung erforderlich sind.

Bei der Vorrichtung gemäß der Erfindung ist die optische Niveaumesseinrichtung teilweise in Umwälzrichtung vor dem Siebsystem und teilweise in Umwälzrichtung nach dem Siebsystem angeordnet. Die optische Niveaumesseinrichtung kann auch durch das Siebsystem durchgeführt sein. Vorzugsweise ist die optische Niveaumesseinrichtung so ausgeführt und angeordnet, dass sie durch das Siebsystem durchreicht und sowohl wenigstens ein Niveau vor dem Siebsystem und wenigstens ein Niveau nach dem Siebsystem überwacht. Es ist jedoch auch denkbar, beispielsweise den Lichtleiter aus dem Umwälzkreis herauszuführen, um so das Siebsystem zu umgehen. Auch bei dieser Ausführungsform lassen sich dann durch geschicktes Einleiten und Durchleiten des Lichts in bzw. durch den Lichtleiter vor und nach dem Siebsystem Flüssigkeitsniveaus detektieren.

Der Lichtleiter ist vorzugsweise aus Quarz, Glas oder Kunststoff gefertigt. Verwendet werden können beispielsweise die bekannten Kunststoffe Polymethylmethacrylat, Polycarbonat, Polyamid, Polystyrol oder Polyvinylchlorid.

In einer bevorzugten Ausführungsform weist der Lichtleiter im Wesentlichen die Form eines Prisma oder eines Zylinders auf. Der Lichtleiter ist dann vorzugsweise länglich ausgebildet, so dass er sich über mehrere Füllniveaus hinweg erstrecken kann.

Des Weiteren kann es vorteilhaft sein, wenn sich eine Querschnittsfläche des Lichtleiters senkrecht zu einer Längsachse bzw. Längsausdehnung des Lichtleiters in Längsrichtung in ihrer Größe und/oder Form verändert. Sollen mit einem Lichtleiter mehrere Füllniveaus überwacht werden, kann dann das in den Lichtleiter eingestrahlte Licht auf verschiedene Flächen an der Außenwand auftreffen und gebrochen werden. Besonders bevorzugt kann es auch sein, wenn der Lichtleiter an seiner Außenfläche und/oder in seinem Innern wenigstens ein Mittel umfasst, das dazu vorgesehen ist einen eingestrahlten Lichtstrahl zu reflektieren und/oder umzulenken, insbesondere wenigstens eine Erhebung und/oder wenigstens eine Vertiefung und/oder wenigstens eine Fläche und/oder wenigstens einen Einsatz. Durch dieses Mittel kann das in den Lichtleiter eingestrahlte Licht beispielsweise gezielt auf einen zur Füllstandüberwachung vorgesehen Bereiche des Lichtleiters geführt und/oder anschließend auf den Lichtempfänger reflektiert bzw. umgelenkt werden. Als Einsatz kann beispielsweise ein in den Lichtleiter eingesetztes Prisma dienen.

In einer weiteren besonders bevorzugten Ausführungsform ist der Lichtleiter im Wesentlichen spiralförmig bzw. helix- oder schraubenförmig ausgebildet. In die Spirale bzw. Helix eingestrahltes Licht wird aufgrund der speziellen Form an der Außenwand des Lichtleiters sehr häufig reflektiert bzw. gebrochen und nimmt bei einem von Luft oder Gas umgebenem Lichtleiter also einen annähernd zick-zack-förmigen Verlauf im Lichtleiter. Ist der spiralförmige Lichtleiter von einer Flüssigkeit umgeben, so erreicht nur ein Teil des eingestrahlten Lichts den Lichtempfänger, wobei die detektierbare Lichtintensität annähernd proportional zu der von Flüssigkeit umgebenen Außenfläche des Lichtleiters ist.

Insbesondere vorteilhaft ist es, wenn die optische Niveaumesseinrichtung eine Lichtquelle oder mehrere Lichtquellen und einen Lichtempfänger zur Überwachung eines oder mehrerer Flüssigkeitsniveaus oder zur kontinuierlichen Überwachung des Flüssigkeitsniveaus umfasst. Werden mehrere Lichtquellen, beispielsweise Leuchtdioden, verwendet, können diese das abgegebene Licht an derselben Stelle in den Lichtleiter einstrahlen, um beispielsweise eine hohe Lichtintensität zu erreichen. Es ist aber auch möglich, dass die Lichtquellen an verschiedenen Stellen am Lichtleiter angeordnet sind, so dass Licht an verschiedenen Stellen in den Lichtleiter eingestrahlt und durch geeignete Mittel zum selben Lichtempfänger geleitet werden kann. Die vom Lichtempfänger detektierte Lichtintensität erlaubt in jedem Fall eine Aussage über die zu überwachenden Flüssigkeitsniveaus.

Weiterhin kann es auch vorteilhaft sein, wenn die optische Niveaumesseinrichtung eine Lichtquelle oder mehrere Lichtquellen und mehrere Lichtempfänger zur Überwachung mehrerer Flüssigkeitsniveaus umfasst. Jeder Lichtempfänger ist dann vorzugsweise einer oder auch mehrer Lichtquellen zugeordnet. Die am Lichtempfänger detektierte Lichtintensität ist dann in der Regel einem zu überwachenden Füllniveau zuzuordnen. Es können auch einer Lichtquelle mehrere Lichtempfänger zugeordnet sein, wenn es sich als vorteilhaft erweist auf diese Weise mehrere Füllniveaus zu erfassen.

Dabei ist wenigstens ein Lichtempfänger an einer Seite des Lichtleiters angeordnet, an der die wenigstens eine Lichtquelle das Licht in den Lichtleiter einstrahlt, und/oder wenigstens ein Lichtempfänger an einer Seite des Lichtleiters angeordnet, an der das Licht, das an einer anderen Seite von der wenigstens einen Lichtquelle in den Lichtleiter eingestrahlt wird, ausgestrahlt wird. Das bedeutet, die wenigstens eine Lichtquelle und wenigstens ein Lichtempfänger können zum Beispiel direkt nebeneinander angeordnet sein. Das Licht wird auf einer Seite in den Lichtleiter eingestrahlt, wird an einer bzw. mehreren bestimmte(n) Stelle(n) bzw. Bereich(en) reflektiert und tritt dann auf derselben Seite aus dem Lichtleiter aus, auf der es eingestrahlt wurde. Weiterhin ist es auch möglich, dass das von der Lichtquelle eingestrahlte Licht im Lichtleiter einfach oder mehrfach umgelenkt wird, so dass es an einer anderen Stelle bzw. Seite aus dem Lichtleiter austritt, an bzw. auf der es eingestrahlt wurde. Das ist zum Beispiel beim spiralförmigen Lichtleiter der Fall. Wenigstens ein Lichtempfänger ist an dem Ende bzw. der Seite oder Stelle des Lichtleiters angeordnet an der der Lichtaustritt aus dem Lichtleiter zu erwarten ist. Darüber hinaus ist es auch möglich mehrere Empfänger an verschiedenen Stellen am Lichtleiter anzuordnen oder mehrere Lichtquellen an verschiedenen Stellen am Lichtleiter vorzusehen.

Die wenigstens eine Lichtquelle und/oder der wenigstens eine Lichtempfänger können bzw. kann innerhalb des Lichtleiters oder außerhalb des Lichtleiters am Lichtleiter angeordnet sein, sprich, das Lichtleitermaterial kann die Lichtquelle und/oder den Lichtempfänger umgeben oder sich an diese anschließen oder in einem gewissen Abstand zu Lichtquelle und/oder Lichtempfänger angeordnet sein.

Besonders vorteilhaft ist es, wenn die optische Niveaumesseinrichtung wenigstens zwei, nebeneinander angeordnete Lichtleiter mit jeweils unterschiedlicher Länge bzw. Längsausdehnung entlang ihrer Längsachse zur Erfassung verschiedener Füllniveaus umfasst. Die nebeneinander angeordneten Lichtleiter sind dann vorzugsweise mit ihren Längsachsen im Wesentlichen senkrecht zu einer Arbeitsflüssigkeitsoberfläche ausgerichtet. Vorteilhaft ist es auch, wenn eine Stirnfläche des jeweiligen, beispielsweise zylindrischen, Lichtleiters aus einer Ebene senkrecht zu einer Längsachse des Lichtleiters geneigt ist. An der gegenüberliegenden Stirnfläche des Zylinders eingestrahltes Licht kann dann an der geneigten Stirnfläche gebrochen und auf einen Lichtempfänger zurückgeworfen werden.

Die Lichtleiter lassen sich dann vorteilhaft in Form einer Treppe nebeneinander bzw. aneinander angrenzend anordnen, wobei in der Regel jedem Lichtleiter eine Lichtquelle und ein Lichtempfänger zugeordnet ist. Auf diese Weise ergibt sich ein "Treppensensor" der je nach Anzahl der Lichtleiter beliebig viele Stufen umfassen kann. Jede Stufe lässt sich dann wenigstens einem Füllniveaus zuordnen. Zum Beispiel können im Speziellen besonders lange Lichtleiter bzw. besonders hohe Treppenstufen vorgesehen sein, die durch das Siebsystem durchreichen und den Flüssigkeitsstand vor dem Siebsystem überwachen oder besonders niedrige Treppenstufen, mit dessen Hilfe sich eine vollständige Entleerung detektieren lässt.

Insbesondere vorteilhaft ist es, wenn die optische Niveaumesseinrichtung wenigstens einen im Wesentlichen spiralförmig ausgebildeten Lichtleiter umfasst. Dem Lichtleiter ist wiederum vorzugsweise eine Lichtquelle und ein Lichtempfänger zugeordnet. Mit dem spiralförmigen Lichtleiter ist dann ein kontinuierlicher Anstieg oder Abfall des Arbeitsflüssigkeitsniveaus im Haushaltsgerät vor und/oder nach dem Siebsystem überwachbar.

In einer weiteren besonders zweckmäßigen Ausführungsform der Vorrichtung umfasst die optische Niveaumesseinrichtung wenigstens einen Lichtleiter, der sich in wenigstens einer Stufe über wenigstens eine zur Längsachse des Lichtleiters hin geneigte Fläche in seiner Längsausdehnung verjüngt. Auch diesem Lichtleiter ist vorzugsweise eine Lichtquelle und ein Lichtempfänger zugeordnet. Jede Stufe des Lichtleiters lässt sich dann vorzugsweise wenigstens einem Füllniveau zuordnen, da an der zur Längsachse hin geneigten Fläche das in Längsrichtung in den Lichtleiter eingestrahlte Licht gebrochen und in geeigneter Weise auf einen Lichtempfänger zurückgeworfen werden kann. In einer bevorzugten Ausführungsform verjüngt sich der Lichtleiter an einem Ende bis auf eine Querschnittsfläche Null, sprich, eine zur Längsachse hin geneigte Fläche bildet eine im Wesentlichen kegel- oder pyramidenförmige Spitze des Lichtleiters. Auch diese Ende bzw. die Spitze kann einem Füllniveaus zugeordnet werden.

Die wenigstens eine Lichtquelle und/oder der wenigstens eine Lichtempfänger können bzw. kann vorzugsweise im Umwälzkreis oder außerhalb des Umwälzkreises angeordnet sein. Der Vorteil einer Anordnung außerhalb des Umwälzkreises ist, dass sich die Lichtquelle und/oder der Lichtempfänger in einer trockenen Umgebung befinden und nicht separat gegen Eindringen von Wasser geschützt werden müssen.

Insbesondere vorteilhaft ist es, wenn die optische Niveaumesseinrichtung oder die wenigstens eine Lichtquelle und/oder der wenigstens eine Lichtempfänger und/oder der wenigstens eine Lichtleiter durch eine Behälterwand durchgeführt sind bzw. ist.

Der Lichtleiter kann zusammen mit der Lichtquelle und/oder dem Lichtempfänger aus dem Umwälzkreis herausgeführt sein. Es ist aber auch möglich, dass der Lichtleiter an der Grenze des Umwälzkreises bzw. der Behälterwand endet. Zwischen der Behälterwand und dem wenigstens einen Lichtempfänger und/oder der wenigstens einen Lichtquelle oder der optischen Niveaumesseinrichtung oder dem optischen Lichtleiter ist dann vorzugsweise eine Dichtung vorgesehen.

In einer besonders vorteilhaften Ausführungsform umfasst die Vorrichtung gemäß der Erfindung eine Auswerteeinheit und/oder eine Anzeigeeinheit. Über eine Signalübertragungseinrichtung können dann die detektierten Lichtintensitäten an die Auswerteeinheit weitergegeben werden, die dann das oder die aktuelle(n) Füllniveau(s) ermittelt. Je nach Füllniveau können dann wiederum die im jeweiligen Fall vorteilhaften Maßnahmen, beispielsweise Zu- oder Abfuhr von Arbeitsflüssigkeit oder eine Siebreinigung ausgelöst werden. Über die Anzeigeeinheit können beispielsweise aktuelle Betriebszustände in Zusammenhang mit dem Flüssigkeitsstand angezeigt werden.

In einer besonders bevorzugten Ausführungsform der Vorrichtung gemäß der Erfindung ist eine optische Niveaumesseinrichtung in Umwälzrichtung nach dem Siebsystem in einer Ablaufwanne des Haushaltsgerätes angeordnet, die am Boden eines Spülbehälters des Haushaltsgeräts angeordnet ist. Besonders vorteilhaft ist es dann, wenn die optische Niveaumesseinrichtung in der Ablaufwanne, insbesondere wenigstens ein optischer Lichtleiter der optischen Niveaumesseinrichtung, wenigstens teilweise durch das Siebsystem durchgeführt ist.

Die wenigstens eine optische Niveaumesseinrichtung ist dann vorzugsweise so ausgeführt, dass er in Umwälzrichtung vor dem Siebsystem wenigstens ein Sicherheitsniveau der Arbeitsflüssigkeit und in Umwälzrichtung nach dem Siebsystem wenigstens ein Arbeitsniveau und/oder ein Entleerungsniveau der Arbeitsflüssigkeit überwacht. Wird als optischer Lichtleiter ein spiralförmiger Lichtleiter eingesetzt, lassen sich nahezu beliebig viele Flüssigkeitsstände der Arbeitsflüssigkeit überwachen.

Das flüssigkeitsführende Haushaltsgerät, insbesondere Haushaltsgeschirrspülmaschine, gemäß Anspruch 27 umfasst einen Umwälzkreis, in dem eine Arbeitsflüssigkeit umgewälzt wird, ein im Umwälzkreis angeordnetes Siebsystem und eine Vorrichtung zur Überwachung wenigstens eines Flüssigkeitsniveaus nach einem oder mehreren der vorhergehenden Ansprüche.

Bei dem Verfahren gemäß Anspruch 19 zur Niveauüberwachung in einem flüssigkeitsführenden Haushaltsgerät mit einem Umwälzkreis, in dem eine Arbeitsflüssigkeit umgewälzt wird, und einem im Umwälzkreis angeordneten Siebsystem, wird durch Messen und/oder Auswerten einer in einem lichtleitenden Medium reflektierten Lichtintensität wenigstens ein Flüssigkeitsniveaus in einer Umwälzrichtung vor dem Siebsystem und wenigstens ein Flüssigkeitsniveaus in Umwälzrichtung nach dem Siebsystem bestimmt und/oder überwacht, wobei das Verfahren unter Verwendung der Vorrichtung nach einem oder mehreren der vorhergehenden Ansprüche durchgeführt wird. Das lichtleitende Medium ist ein Lichtleiter, wobei über eine Lichtquelle Licht eingestrahlt wird und die reflektierte Lichtintensität an einem Lichtempfänger detektiert wird.

In einer besonders bevorzugten Ausführungsform des Verfahrens gemäß der Erfindung wird zu Beginn eines Arbeitszyklusses dem Umwälzkreis Flüssigkeit zugeführt bis ein maximales Arbeitsniveau in Umwälzrichtung nach dem Siebsystem erreicht ist oder bei Erreichen eines minimalen Arbeitsniveaus in Umwälzrichtung nach dem Siebsystem dem Umwälzkreis Flüssigkeit zugeführt, bis ein maximales Arbeitsniveau in Umwälzrichtung nach dem Siebsystem erreicht ist. Dadurch wird zum einen verhindert, dass bei der Flüssigkeitszufuhr zu viel Flüssigkeit in das Haushaltsgerät geleitet wird, und zum anderen dass ein minimales Arbeitsniveau unterschritten wird, was sich nachteilig auf das Betriebsverhalten und den Reinigungserfolg des Haushaltsgeräts auswirken kann. Ein Arbeitszyklus kann sowohl mit dem Start des Haushaltsgeräts als auch während des Betriebs des Haushaltsgeräts, beispielsweise nach Abpumpen der Arbeitsflüssigkeit vor einem neuen Spül- oder Waschgang, beginnen.

Insbesondere vorteilhaft ist es auch, wenn bei Erreichen eines Sicherheitsniveaus der Arbeitsflüssigkeit in Umwälzrichtung vor dem Siebsystem eine Siebreinigungsmaßnahme ausgelöst wird und/oder ein Überschreiten der zulässigen Siebbeladung angezeigt wird. Dadurch wird verhindert, dass bei Absinken des Arbeitsniveaus nach dem Siebsystem infolge einer zunehmenden Siebbeladung wie vorangehend beschrieben weiterhin Flüssigkeit in den Umwälzkreis geführt wird.

Die Erfindung wird im Folgenden anhand von Ausführungsbeispielen und unter Bezugnahme auf die beiliegenden Zeichnungen weiter erläutert.

Es zeigen jeweils in schematischer Darstellung:
FIG 1 eine vorteilhafte Ausführungsform der Vorrichtung gemäß der Erfindung,
FIG 2 eine Prinzipskizze der optischen Niveaumesseinrichtung der Vorrichtung nach FIG 1,
FIG 3 eine Prinzipskizze einer abgewandelten, optischen Niveaumesseinrichtung für die Vorrichtung gemäß der Erfindung,
FIG 4 eine Prinzipskizze einer weiteren, abgewandelten, optischen Niveaumesseinrichtung für die Vorrichtung gemäß der Erfindung.

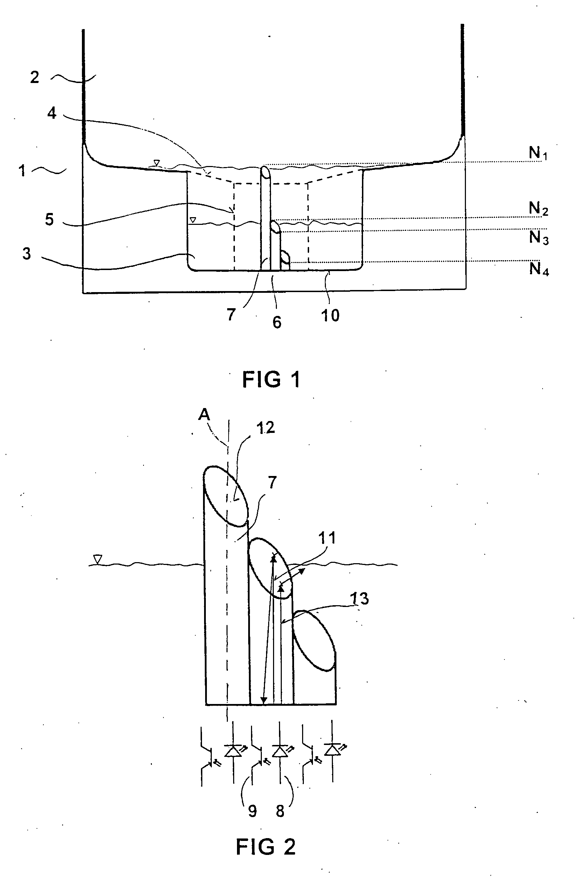

Einander entsprechende Teile und Größen sind in den FIG 1 bis 4 mit denselben Bezugszeichen versehen.

FIG 1 zeigt eine vorteilhafte Ausführungsform der Vorrichtung gemäß der Erfindung im Einsatz in einer Haushaltsgeschirrspülmaschine 1 mit einem teilweise dargestellten Spülbehälter 2 und einer an den Spülbehälter 2 anschließenden Ablaufwanne 3. Die Öffnung der Ablaufwanne 2 in den Spülbehälter 1 wird von einer Siebplatte 4 eines herausnehmbaren Siebsystems abgedeckt. Das Siebsystem besteht aus der Siebplatte 4 und einem Siebstutzen 5, der mittig auf der Sieblatte aufgesetzt ist und in die Ablaufwanne 3 hineinragt. Der Spülbehälter 2 und die Ablaufwanne 3 bilden einen Teil des Umwälzkreises des Haushaltsgerätes 1. Die Hauptströmungsrichtung bzw. Umwälzrichtung der Arbeitsflüssigkeit ist von dem Spülbehälter 2 über das Siebsystem in die Ablaufwanne 3 gerichtet. Die Arbeitsflüssigkeit wird anschließend über eine Umwälzpumpe (nicht dargestellt) von der Ablaufwanne 3 wieder in den Spülbehälter 2 zurückgeführt.

Am Boden 10 der Ablaufwanne 3 ist eine optische Niveaumesseinrichtung 6 der erfindungsgemäßen Vorrichtung angebracht. Die Niveaumesseinrichtung 6 umfasst drei optische Lichtleiter 7 unterschiedlicher Länge, die zusammen einen "Treppensensor" bilden. Jedem optischen Lichtleiter 7 ist eine Lichtquelle 8, vorzugsweise eine Leuchtdiode, und ein Lichtempfänger 9, vorzugsweise eine Photodiode, zugeordnet. Die Lichtquelle 8 und der Lichtempfänger 9 sind jeweils an der gleichen Seite des Lichtleiters 7 außerhalb der Ablaufwanne 3 angeordnet (vgl. auch FIG 2). Die Niveaumesseinrichtung, insbesondere die Lichtleiter 7 der Niveaumesseinrichtung, ist bzw. sind durch den Boden 10 der Ablaufwanne 3 geführt und am Durchbruch gegen die Ablaufwanne 3 abgedichtet. auf diese Weise ist gewährleistet, dass sich die Elektronik der Niveaumesseinrichtung in trockener Umgebung befindet. Die Lichtleiter 7 sind als Zylinder ausgeführt und weisen jeweils unterschiedliche Längsausdehnungen auf zur Überwachung unterschiedlicher Flüssigkeitsniveaus. An der vom Boden 10 der Ablaufwanne 3 abgewandten Seite ist jeweils eine Stirnfläche 12 der zylinderförmigen Lichtleiter 7 aus der Ebene senkrecht zu ihrer Längsachse A geneigt, so dass in die Lichtleiter 7 eingestrahltes Licht an diesen geneigten bzw. schrägen Stirnflächen 12 gebrochen und zu den Lichtempfänger 9 zurückgeworfen werden kann.

Wird nun wie in FIG 2 dargestellt von der Lichtquelle 8 in Richtung vom Boden 10 der Ablaufwanne 3 zur vom Boden 10 der Ablaufwanne 3 abgewandten Seite des Lichtleiters Licht in den Lichtleiter 7 eingestrahlt, so passieren die Lichtstrahlen 11, 13 den Lichtleiter 8 in seiner Längsausdehnung und werden an der schrägen Stirnfläche 12, sofern diese von Luft umgeben ist, nahezu vollständig reflektiert (beispielhaft Lichtstrahl 11). Der unterhalb des Bodens 10 der Ablaufwanne 3 angeordnete Lichtempfänger 9 detektiert dann die reflektierten Lichtstrahlen 11. Ist die schräge Stirnfläche 12 teilweise von Flüssigkeit bedeckt, so wird das auf die Stirnfläche 12 auftreffende Licht nur zum Teil reflektiert (in den Bereichen in Kontakt mit Luft, beispielhaft Lichtstrahl 11) und zum Teil in die Flüssigkeit hinein gebrochen bzw. abgelenkt (in den Bereichen in Kontakt mit Flüssigkeit, beispielhaft Lichtstrahl 13). Die am Lichtempfänger 9 detektierte Lichtintensität ist dann niedriger als die Intensität des nahezu vollständig reflektierten Lichts. Ist die schräge Stirnfläche 12 vollständig von Flüssigkeit bedeckt, so wird das auf die Stirnfläche 12 auftreffende Licht nahezu vollständig in die Flüssigkeit gebrochen, so dass am Lichtempfänger 9 nahezu kein Licht mehr ankommt. Als Schaltpunkt zur Niveauüberwachung kann nun sowohl die Füllhöhe dienen, bei der die Lichtintensität am größten ist, also nahezu vollständige Reflektion, als auch die Füllhöhe bei der die detektierte Lichtintensität am geringsten ist.

Die in FIG 1 dargestellte Niveaumesseinrichtung ist zur Überwachung vier verschiedener Flüssigkeitsniveaus N₁, N₂, N₃, N₄ vorgesehen. Ein Flüssigkeitsniveau N₁ entspricht einem Sicherheitsniveau vor dem Siebsystem zur Erkennung einer kritischen Siebbeladung. Wird das Niveau N₁ erreicht, wird signalisiert, dass eine Siebreinigung erforderlich ist, oder eine Maßnahme zur Siebreinigung eingeleitet, bis der Flüssigkeitsstand wieder unter die schräge Stirnfläche 12 abgesunken ist, also die größte Lichtintensität erreicht wird. Ein Flüssigkeitsniveau N₂ ist ein maximales Arbeitsniveau der Geschirrspülmaschine. Das Befüllen des Haushaltsgeräts erfolgt solange, bis das Niveau N₂ erreicht ist. Wird ein minimales Arbeitsflüssigkeitsniveau N₃ unterschritten, so wird wiederum Flüssigkeit nachgefüllt, bis das maximale Arbeitsflüssigkeitsniveau N₂ erreicht ist. Ein Flüssigkeitsniveau N₄ entspricht einer nahezu vollständigen Entleerung der Ablaufwanne 3.

Durch eine Ergänzung beliebig vieler weiterer Lichtleiter 7 mit Lichtquelle 8 und Lichtempfänger 9 ließen sich mit der Niveaumesseinrichtung 6 weitere Flüssigkeitsniveaus bestimmen. Eine weitere Möglichkeit noch mehr Flüssigkeitsniveaus im Haushaltsgerät 1 zu überwachen, wäre die Vorrichtung durch weitere Niveaumesseinrichtungen 6 zu erweitern.

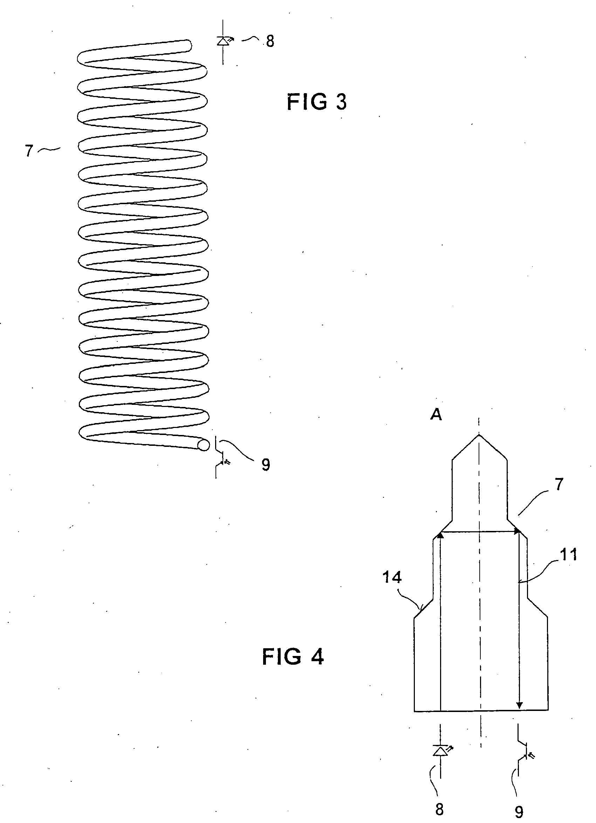

FIG 3 zeigt eine Niveaumesseinrichtung 6 mit spiralförmigem Lichtleiter 7. Das Licht wird von der Lichtquelle 8 an einem Ende (Stirnfläche des spiralförmig ausgebildeten Zylinders) des Lichtleiters 7 eingestrahlt und an der Außenwand (Zylindermantel) des spiralförmigen Lichtleiters 7 mehrfach gebrochen, bis es schließlich am anderen Ende (gegenüberliegende Stirnfläche des spiralförmig ausgebildeten Zylinders) des Lichtleiters 7 auf den Lichtempfänger trifft. Mit dieser Niveaumesseinrichtung lässt sich über die gesamte Höhe der Niveaumesseinrichtung 6 das Flüssigkeitsniveau an jeder Stelle bestimmen. Wird diese Niveaumesseinrichtung 6 mit spiralförmigem Lichtleiter 7 für die Vorrichtung gemäß FIG 1 verwendet, so ist der Lichtleiter 7 vorzugsweise durch die Siebplatte 4 durchgeführt und reicht möglichst bis zum Boden 10 der Ablaufwanne 3. Die Leuchtquelle 8 kann in Umwälzrichtung vor der Siebplatte 4 platziert werden und Licht in den Lichtleiter einstrahlen, der Lichtempfänger 9 kann am anderen Ende des Lichtleiters 7 in Umwälzrichtung nach dem Siebsystem die dort abgestrahlte Lichtintensität detektieren. Auf diese Weise lässt sich jeweils der aktuelle Flüssigkeitsstand vor und nach dem Siebsystem überwachen.

FIG 4 zeigt eine weitere vorteilhafte Ausführungsform einer Niveaumesseinrichtung 6 für die Vorrichtung gemäß der Erfindung. Zur Bestimmung verschiedener Flüssigkeitsniveaus verjüngt sich der Lichtleiter 7 in seiner Längsausdehnung jeweils über eine schräge Fläche 14. An jeder dieser schrägen Flächen 14 wird der von der Lichtquelle 8 eingestrahlte Lichtstrahl 11 gebrochen und je nachdem, ob diese Fläche 14 benetzt ist oder nicht, im Lichtleiter 7 auf den Lichtempfänger 9 zurückgeleitet (vgl. FIG 4) oder in die Flüssigkeit abgelenkt (nicht dargestellt). Wird die Niveaumesseinrichtung 6 nach FIG 4 für die Vorrichtung gemäß FIG 1 verwendet, lassen sich wiederum wenigstens die Flüssigkeitsniveaus N₁, N₂, N₃, N₄ überwachen. Der Niveaumesseinrichtung wird dann zur Bestimmung des Flüssigkeitsniveaus N₁ vor dem Siebsystem durch die Siebplatte 4 durchgeführt. Durch Ausformen weiterer schräger Flächen 14 am Umfang des Lichtleiters 7 ließen sich beispielsweise weitere Füllniveaus überwachen.

### Bezugszeichenliste

- 1: Hauhaltsgeschirrspülmaschine
- 2: Spülbehälter
- 3: Ablaufwanne
- 4: Siebplatte
- 5: Siebstutzen
- 6: Niveaumesseinrichtung
- 7: optischer Lichtleiter
- 8: Lichtquelle
- 9: Lichtempfänger
- 10: Boden der Ablaufwanne
- 11: Lichtstrahl
- 12: Stirnfläche
- 13: Lichtstrahl
- 14: schräge Fläche

- A: Längsachse
- N₁, N₂, N₃, N₄: Flüssigkeitsniveaus

## Patentansprüche

1. Vorrichtung zur Überwachung wenigstens eines Flüssigkeitsniveaus einer Arbeitsflüssigkeit in einem flüssigkeitsführenden Haushaltsgerät mit
a) einem Umwälzkreis, in dem die Arbeitsflüssigkeit umgewälzt wird,
b) und einem im Umwälzkreis angeordneten Siebsystem, das sich in einem Bereich des Umwälzkreises befindet, wo eine Umwälzrichtung von oben nach unten weist,
c) wobei wenigstens eine optische Niveaumesseinrichtung (6) vorgesehen ist zur Überwachung wenigstens eines Flüssigkeitsniveaus (N₁) in Umwälzrichtung vor dem Siebsystem und wenigstens eines Flüssigkeitsniveaus (N₂, N₃, N₄) in Umwälzrichtung nach dem Siebsystem,
**dadurch gekennzeichnet,**
**dass** die optische Niveaumesseinrichtung (6) wenigstens einen Lichtleiter (7) und wenigstens eine Lichtquelle (8) und wenigstens einen Lichtempfänger (9) umfasst, wobei die optische Niveaumesseinrichtung (6) teilweise in Umwälzrichtung vor dem Siebsystem und teilweise in Umwälzrichtung nach dem Siebsystem angeordnet ist, und wobei die optische Niveaumesseinrichtung (6) durch das Siebsystem durchgeführt ist.

2. Vorrichtung nach Anspruch 1, **dadurch gekennzeichnet,**
**dass** der Lichtleiter (7) aus Quarz oder Glas oder Kunststoff besteht und vorzugsweise im Wesentlichen die Form eines Prisma oder eines Zylinders aufweist.

3. Vorrichtung nach Anspruch 2, **dadurch gekennzeichnet,**
**dass** sich eine Querschnittsfläche des Lichtleiters (7) senkrecht zu einer Längsachse (A) des Lichtleiters (7) in Längsrichtung in ihrer Größe und/oder Form verändert.

4. Vorrichtung nach Anspruch 2 oder Anspruch 3, **dadurch gekennzeichnet,**
**dass** der Lichtleiter (7) an seiner Außenfläche oder in seinem Innern wenigstens ein Mittel umfasst, das dazu vorgesehen ist einen eingestrahlten Lichtstrahl zu reflektieren und/oder umzulenken, insbesondere wenigstens eine Erhebung und/oder wenigstens eine Vertiefung und/oder wenigstens eine Fläche (12, 14) und/oder wenigstens einen Einsatz.

5. Vorrichtung nach einem oder mehreren der vorhergehenden Ansprüche, **dadurch gekennzeichnet,**
**dass** der Lichtleiter (7) im Wesentlichen spiralförmig ausgebildet ist.

6. Vorrichtung nach einem oder mehreren der vorhergehenden Ansprüche, **dadurch gekennzeichnet,**
**dass** die optische Niveaumesseinrichtung (6) eine Lichtquelle (8) oder mehrere Lichtquellen (8) und wenigstens einen Lichtempfänger (9) zur Überwachung wenigstens eines Flüssigkeitsniveaus umfasst.

7. Vorrichtung nach Anspruch 6, **dadurch gekennzeichnet,**
**dass** wenigstens ein Lichtempfänger (9) an einer Seite des Lichtleiters (7) angeordnet ist, an der die wenigstens eine Lichtquelle (8) das Licht in den Lichtleiter (7) einstrahlt, und/oder
**dass** wenigstens ein Lichtempfänger (9) an einer Seite des Lichtleiters (7) angeordnet ist, an der das an einer anderen Seite von der wenigstens einen Lichtquelle (8) in den Lichtleiter eingestrahlte Licht, ausgestrahlt wird.

8. Vorrichtung nach einem oder mehreren der vorhergehenden Ansprüche, **dadurch gekennzeichnet,**
**dass** die wenigstens eine Lichtquelle (8) und/oder der wenigstens ein Lichtempfänger (9) innerhalb des Lichtleiters (7) oder außerhalb des Lichtleiters (7) am Lichtleiter (7) angeordnet sind bzw. ist.

9. Vorrichtung nach einem oder mehreren der vorhergehenden Ansprüche, **dadurch gekennzeichnet,**
**dass** die optische Niveaumesseinrichtung (6) wenigstens zwei nebeneinander angeordnete Lichtleiter (7) mit jeweils unterschiedlicher Länge zur Erfassung verschiedener Füllniveaus umfasst, wobei vorzugsweise die nebeneinander angeordneten Lichtleiter (7) mit ihren Längsachsen (A) im Wesentlichen senkrecht zu einer Arbeitsflüssigkeitsoberfläche ausgerichtet sind.

10. Vorrichtung nach Anspruch 9, **dadurch gekennzeichnet,**
**dass** eine Stirnfläche (12) des Lichtleiters (7) aus einer Ebene senkrecht zu einer Längsachse (A) des Lichtleiters (7) geneigt ist.

11. Vorrichtung nach einem oder mehreren der Ansprüche 1 bis 8, **dadurch gekennzeichnet,**
**dass** die optische Niveaumesseinrichtung (6) wenigstens einen im Wesentlichen spiralförmig ausgebildeten Lichtleiter (7) umfasst.

12. Vorrichtung nach einem oder mehreren der vorhergehenden Ansprüche, **dadurch gekennzeichnet,**
**dass** die optische Niveaumesseinrichtung (6) wenigstens einen Lichtleiter (7) umfasst, der sich in wenigstens einer Stufe über wenigstens eine zur Längsachse (A) des Lichtleiters hin geneigte Fläche (14) in Längsrichtung verjüngt.

13. Vorrichtung nach einem oder mehreren der Ansprüche 9 bis 12, **dadurch gekennzeichnet,**
**dass** an jedem Lichtleiter (7) eine Lichtquelle (8) und ein Lichtempfänger (9) angeordnet sind.

14. Vorrichtung nach einem oder mehreren der vorhergehenden Ansprüche,
dass die optische Niveaumesseinrichtung (6) oder die wenigstens eine Lichtquelle (8) und/oder der wenigstens eine Lichtempfänger (9) und/oder der wenigstens eine Lichtleiter (7) durch eine Behälterwand durchgeführt sind bzw. ist, wobei vorzugsweise zwischen der Behälterwand und dem wenigstens einen Lichtempfänger (9) und/oder der wenigstens einen Lichtquelle (8) oder der Niveaumesseinrichtung (6) oder dem optischen Lichtleiter (7) eine Dichtung vorgesehen ist.

15. Vorrichtung nach einem oder mehreren der vorhergehenden Ansprüche,
umfassend eine Auswerteeinheit und/oder eine Anzeigeeinheit, insbesondere eine optische Niveaumesseinrichtung (6), die in Umwälzrichtung nach dem Siebsystem in einer Ablaufwanne (3) des Haushaltsgeräts (1) angeordnet ist, die an einem Boden (10) eines Spülbehälters (2) des Haushaltsgeräts (1) angeordnet ist.

16. Vorrichtung nach Anspruch 15, **dadurch gekennzeichnet,**
**dass** die optische Niveaumesseinrichtung (6) in der Ablaufwanne (3), insbesondere wenigstens ein optischer Lichtleiter (7) der optischen Niveaumesseinrichtung (6), wenigstens teilweise durch das Siebsystem durchgeführt ist.

17. Vorrichtung nach Anspruch 15oder Anspruch 16, **dadurch gekennzeichnet,**
**dass** die wenigstens eine optische Niveaumesseinrichtung (6) so ausgeführt ist, dass sie in Umwälzrichtung vor dem Siebsystem wenigstens ein Sicherheitsniveau (N₁) der Arbeitsflüssigkeit und in Umwälzrichtung nach dem Siebsystem wenigstens ein Arbeitsniveau (N₂, N₃) und/oder ein Entleerungsniveau (N₄) der Arbeitsflüssigkeit überwacht.

18. Flüssigkeitsführendes Haushaltsgerät, insbesondere Haushaltsgeschirrspülmaschine, umfassend einen Umwälzkreis, in dem eine Arbeitsflüssigkeit umgewälzt wird, ein im Umwälzkreis angeordnetes Siebsystem und eine Vorrichtung zur Überwachung wenigstens eines Flüssigkeitsniveaus nach einem oder mehreren der vorhergehenden Ansprüche.

19. Verfahren zur Niveauüberwachung in einem flüssigkeitsführenden Haushaltsgerät mit einem Umwälzkreis, in dem eine Arbeitsflüssigkeit umgewälzt wird, und einem im Umwälzkreis angeordneten Siebsystem,
bei dem durch Messen und/oder Auswerten einer in einem lichtleitenden Medium reflektierten Lichtintensität wenigstens ein Flüssigkeitsniveaus (N₁) in einer Umwälzrichtung vor dem Siebsystem und wenigstens ein Flüssigkeitsniveaus (N₂, N₃, N₄) in Umwälzrichtung nach dem Siebsystem bestimmt und/oder überwacht wird, **dadurch gekennzeichnet, dass** das Verfahren unter Verwendung der Vorrichtung nach einem oder mehreren der vorhergehenden Ansprüche durchgeführt wird.

20. Verfahren nach Anspruch 19,
bei dem zu Beginn eines Arbeitszyklusses dem Umwälzkreis Flüssigkeit zugeführt wird bis ein maximales Arbeitsniveau (N₂) in Umwälzrichtung nach dem Siebsystem erreicht ist oder bei Erreichen eines minimalen Arbeitniveaus (N₃) in Umwälzrichtung nach dem Siebsystem
dem Umwälzkreis Flüssigkeit zugeführt wird, bis ein maximales Arbeitsniveau (N₂) in Umwälzrichtung nach dem Siebsystem erreicht ist.

21. Verfahren nach Anspruch 19oder Anspruch 20,
bei dem bei Erreichen eines Sicherheitsniveaus (N₁) der Arbeitsflüssigkeit in Umwälzrichtung vor dem Siebsystem eine Siebreinigungsmaßnahme ausgelöst wird und/oder ein Überschreiten der zulässigen Siebbeladung angezeigt wird.

## Claims

1. Apparatus for monitoring at least one liquid level of a working liquid in a liquid-carrying domestic appliance, comprising
a) a circulation system in which the working liquid is circulated,
b) a screen system which is arranged in the circulation system and is located in a region of the circulation system where a circulation direction points from top to bottom,
c) wherein at least one optical level measuring device (6) is provided for the purpose of monitoring at least one liquid level (N₁) upstream of the screen system in the circulation direction and at least one liquid level (N₂, N₃, N₄) downstream of the screen system in the circulation direction,
**characterized**
**in that** the optical level measuring device (6) comprises at least one light guide (7) and at least one light source (8) and at least one light receiver (9), wherein the optical level measuring device (6) is arranged partly upstream of the screen system in the circulation direction and partly downstream of the screen system in the circulation direction, and wherein the optical level measuring device (6) is routed through the screen system.

2. Apparatus according to Claim 1, **characterized**
**in that** the light guide (7) is composed of quartz or glass or plastic and preferably is substantially in the shape of a prism or a cylinder.

3. Apparatus according to Claim 2, **characterized**
**in that** a cross-sectional area of the light guide (7) perpendicular to a longitudinal axis (A) of the light guide (7) changes size and/or shape in the longitudinal direction.

4. Apparatus according to Claim 2 or Claim 3,
**characterized in that** the light guide (7) comprises, on its outer face or in its interior, at least one means which is provided for reflecting and/or redirecting an incident light beam, in particular at least one raised portion and/or at least one recess and/or at least one surface (12, 14) and/or at least one insert.

5. Apparatus according to one or more of the preceding claims,
**characterized in that** the light guide (7) is of substantially helical design.

6. Apparatus according to one or more of the preceding claims,
**characterized in that** the optical level measuring device (6) comprises a light source (8) or a plurality of light sources (8) and at least one light receiver (9) for monitoring at least one liquid level.

7. Apparatus according to Claim 6, **characterized**
**in that** at least one light receiver (9) is arranged on a side of the light guide (7) on which the at least one light source (8) shines the light into the light guide (7), and/or
**in that** at least one light receiver (9) is arranged on a side of the light guide (7) on which the light which was shone into the light guide by the at least one light source (8) on another side is emitted.

8. Apparatus according to one or more of the preceding claims, **characterized**
**in that** the at least one light source (8) and/or the at least one light receiver (9) are/is arranged on the light guide (7) within the light guide (7) or outside the light guide (7).

9. Apparatus according to one or more of the preceding claims, **characterized**
**in that** the optical level measuring device (6) comprises at least two light guides (7) which are arranged next to one another and each have a different length for the purpose of detecting different filling levels, wherein the light guides (7) which are arranged next to one another are, by way of their longitudinal axes (A), preferably oriented substantially perpendicular to a working liquid surface.

10. Apparatus according to Claim 9, **characterized**
**in that** an end face (12) of the light guide (7) is inclined out of a plane perpendicular to a longitudinal axis (A) of the light guide (7).

11. Apparatus according to one or more of Claims 1 to 8, **characterized**
**in that** the optical level measuring device (6) comprises at least one light guide (7) of substantially helical design.

12. Apparatus according to one or more of the preceding claims, **characterized**
**in that** the optical level measuring device (6) comprises at least one light guide (7) which tapers in the longitudinal direction at at least one level by means of at least one surface (14) which is inclined in the direction of the longitudinal axis (A) of the light guide.

13. Apparatus according to one or more of Claims 9 to 12, **characterized**
**in that** a light source (8) and a light receiver (9) are arranged on each light guide (7).

14. Apparatus according to one or more of the preceding claims, **characterized**
**in that** the optical level measuring device (6) or the at least one light source (8) and/or the at least one light receiver (9) and/or the at least one light guide (7) are/is routed through a container wall, wherein a seal is preferably provided between the container wall and the at least one light receiver (9) and/or the at least one light source (8) or the level measuring device (6) or the optical light guide (7).

15. Apparatus according to one or more of the preceding claims,
comprising an evaluation unit and/or a display unit, in particular an optical level measuring device (6), which is arranged in a drainage pan (3) of the domestic appliance (1) downstream of the screen system in the circulation direction, which drainage pan is arranged on a base (10) of a washing compartment (2) of the domestic appliance (1).

16. Apparatus according to Claim 15, **characterized**
**in that** the optical level measuring device (6) in the drainage pan (3), in particular at least one optical light guide (7) of the optical level measuring device (6), is at least partly routed through the screen system.

17. Apparatus according to Claim 15 or Claim 16, **characterized**
**in that** the at least one optical level measuring device (6) is designed such that it monitors at least one safety level (N₁) of the working liquid upstream of the screen system in the circulation direction and at least one working level (N₂, N₃) and/or an empty level (N₄) of the working fluid downstream of the screen system in the circulation direction.

18. Liquid-carrying domestic appliance, in particular domestic dishwasher, comprising a circulation system in which a working liquid is circulated, a screen system which is arranged in the circulation system, and an apparatus for monitoring at least one liquid level according to one or more of the preceding claims.

19. Method for level monitoring in a liquid-carrying domestic appliance comprising a circulation system in which a working liquid is circulated, and a screen system which is arranged in the circulation system,
in which method at least one liquid level (N₁) upstream of the screen system in a circulation direction and at least one liquid level (N₂, N₃, N₄) downstream of the screen system in the circulation direction is determined and/or monitored by measuring and/or evaluating a light intensity which is reflected in a light-guiding medium, **characterized in that** the method is carried out using the apparatus according to one or more of the preceding claims.

20. Method according to Claim 19,
in which, at the beginning of a working cycle, liquid is supplied to the circulation system until a maximum working level (N₂) is reached downstream of the screen system in the circulation direction, or, when a minimum working level (N₃) is reached downstream of the screen system in the circulation direction, liquid is supplied to the circulation system until a maximum working level (N₂) is reached downstream of the screen system in the circulation direction.

21. Method according to Claim 19 or Claim 20,
in which, when a safety level (N₁) of the working liquid upstream of the screen system in the circulation direction is reached, a screen cleaning measure is initiated and/or the situation of the permissible screen loading being exceeded is displayed.

## Revendications

1. Dispositif de surveillance d'au moins un niveau de liquide d'un liquide de travail dans un appareil électroménager dans lequel circule un liquide, comprenant
a) un circuit de circulation dans lequel le liquide de travail est amené à circuler ;
b) et un système de filtration disposé dans le circuit de circulation, qui se trouve dans une région du circuit de circulation dans laquelle un sens de circulation est dirigé du haut vers le bas,
c) dans lequel il est prévu au moins un dispositif de mesure optique de niveau (6) pour surveiller au moins un niveau de liquide (N₁) en amont du système de filtration dans le sens de circulation et au moins un niveau de liquide (N₂, N₃, N₄) en aval du système de filtration dans le sens de circulation,
**caractérisé en ce que** le dispositif de mesure optique de niveau (6) comprend au moins un conducteur de lumière (7) et au moins une source de lumière (8) et au moins un récepteur de lumière (9), dans lequel le dispositif de mesure optique de niveau (6) est disposé en partie en amont du système de filtration dans le sens de circulation et en partie en aval du système de filtration dans le sens de circulation, et dans lequel le dispositif de mesure optique de niveau (6) est mis en oeuvre par l'intermédiaire du système de filtration.

2. Dispositif selon la revendication 1,
**caractérisé en ce que** le conducteur de lumière (7) est constitué de quartz ou de verre ou de matière plastique et présente de préférence sensiblement la forme d'un prisme ou d'un cylindre.

3. Dispositif selon la revendication 2,
**caractérisé en ce qu'**une surface de section transversale du conducteur de lumière (7) présente une taille et/ou une forme variant perpendiculairement à un axe longitudinal (A) du conducteur de lumière (7) dans le sens longitudinale.

4. Dispositif selon la revendication 2 ou la revendication 3,
**caractérisé en ce que** le conducteur de lumière (7) comprend sur sa surface extérieure ou en son intérieur au moins un agent qui est prévu pour réfléchir et/ou dévier un faisceau lumineux injecté, notamment au moins une partie surélevée et/ou au moins un renfoncement et/ou au moins une surface (12, 14) et/ou au moins un insert.

5. Dispositif selon l'une ou plusieurs des revendications précédentes,
**caractérisé en ce que** le conducteur de lumière (7) est réalisé de manière à présenter sensiblement la forme d'une spirale.

6. Dispositif selon l'une ou plusieurs des revendications précédentes,
**caractérisé en ce que** le dispositif de mesure optique de niveau (6) comprend une source de lumière (8) ou plusieurs sources de lumière (8) et au moins un récepteur de lumière (9) destiné à surveiller au moins un niveau de liquide.

7. Dispositif selon la revendication 6,
**caractérisé en ce qu'**au moins un récepteur de lumière (9) est disposé sur un côté du conducteur de lumière (7) sur lequel ladite au moins une source de lumière (8) injecte de la lumière dans le conducteur de lumière (7), et/ou
**en ce qu'**au moins un récepteur de lumière (9) est disposé sur un côté du conducteur de lumière (7) sur lequel la lumière injectée dans le conducteur de lumière sur un autre côté de l'au moins une source de lumière (8) est émise en sortie.

8. Dispositif selon l'une ou plusieurs des revendications précédentes,
**caractérisé en ce que** l'au moins une source de lumière (8) et/ou l'au moins un récepteur de lumière (9) sont ou est disposé (s) sur le conducteur de lumière (7), à l'intérieur du conducteur de lumière (7) ou à l'extérieur du conducteur de lumière (7).

9. Dispositif selon l'une ou plusieurs des revendications précédentes,
**caractérisé en ce que** le dispositif de mesure optique de niveau (6) comprend au moins deux conducteurs optiques (7) disposés côte à côte, présentant des longueurs respectives différentes, pour détecter des niveaux de remplissage différents, dans lequel les guides optiques (7) disposés côte à côte sont de préférence orientés de manière à ce que leurs axes longitudinaux (A) soient sensiblement perpendiculaires à une surface du liquide de travail.

10. Dispositif selon la revendication 9,
**caractérisé en ce qu'**une surface avant (12) du conducteur de lumière (7) constituée d'un plan perpendiculaire à un axe longitudinal (A) du conducteur de lumière (7) est inclinée.

11. Dispositif selon l'une ou plusieurs des revendications 1 à 8,
**caractérisé en ce que** le dispositif de mesure optique de niveau (6) comprend au moins un conducteur de lumière (7) réalisé de manière à présenter sensiblement la forme d'un spirale.

12. Dispositif selon l'une ou plusieurs des revendications précédentes,
**caractérisé en ce que** le dispositif de mesure optique de niveau (6) comprend au moins un conducteur de lumière (7) qui se rétrécit dans le sens longitudinale en au moins un pas vers au moins une surface (14) inclinée par rapport à l'axe longitudinal (A) du conducteur de lumière.

13. Dispositif selon l'une ou plusieurs des revendications 9 à 12,
**caractérisé en ce qu'**une source de lumière (8) et un récepteur de lumière (9) sont disposés sur chaque conducteur de lumière (7).

14. Dispositif selon l'une ou plusieurs des revendications précédentes,
**caractérisé en ce que** le dispositif de mesure optique de niveau (6) ou l'au moins une source de lumière (8) et/ou l'au moins un récepteur de lumière (9) et/ou l'au moins un conducteur de lumière (7) sont ou est réalisé(s) par l'intermédiaire d'une paroi de récipient, dans lequel il est prévu un élément d'étanchéité entre la paroi de récipient et l'au moins un récepteur de lumière (9) et/ou l'au moins une source de lumière (8) ou le dispositif de mesure de niveau (6) ou le conducteur de lumière optique (7).

15. Dispositif selon l'une ou plusieurs des revendications précédentes,
comprenant une unité d'évaluation et/ou une unité d'affichage, notamment un dispositif de mesure optique de niveau (6) qui est disposé en aval du système de filtration dans le sens de circulation dans une cuve de vidange (3) de l'appareil électroménager (1), laquelle cuve est disposée dans une partie inférieure (10) d'une cuve de rinçage (2) de l'appareil électroménager (1).

16. Dispositif selon la revendication 15,
**caractérisé en ce que** le dispositif de mesure optique de niveau (6) se trouvant dans la cuve de vidange (3), notamment au moins un conducteur de lumière optique (7) du dispositif de mesure optique de niveau (6), est réalisé au moins partiellement par l'intermédiaire du système de filtration.

17. Dispositif selon la revendication 15 ou la revendication 16,
**caractérisé en ce que** l'au moins un dispositif de mesure optique de niveau (6) est réalisé de manière à ce qu'il surveille, en amont du système de filtration dans le sens de circulation, au moins un niveau de sécurité (N₁) du fluide de travail qui, en aval du système de filtration dans le sens de circulation, au moins un niveau de travail (N₂, N₃) et/ou un niveau de vidange (N₄) du liquide de travail.

18. Appareil électroménager dans lequel circule un liquide, notamment lave-vaisselle électroménager, comprenant un circuit de circulation dans lequel un liquide de travail est amené à circuler, un système de filtration disposé dans le circuit de circulation et un dispositif destiné à surveiller au moins un niveau du liquide selon l'une ou plusieurs des revendications précédentes.

19. Procédé de surveillance de niveau dans un appareil électroménager dans lequel circule un liquide, comprenant un circuit de circulation dans lequel un liquide de travail est amené à circuler, et un système de filtration disposé dans le circuit de circulation, dans lequel au moins un niveau de liquide (N₁) est déterminé et/ou surveillé en amont du système de filtration dans le sens de circulation et au moins un niveau de liquide (N₂, N₃, N₄) est déterminé et/ou surveillé en aval du système de filtration dans le sens de circulation par mesure et/ou évaluation d'une intensité lumineuse réfléchie dans un milieu conducteur de lumière, **caractérisé en ce que** le procédé est mis en oeuvre par utilisation du dispositif selon l'une ou plusieurs des revendications précédentes.

20. Procédé selon la revendication 19,
dans lequel, au début d'un cycle de travail, un liquide est introduit dans le circuit de circulation jusqu'à ce qu'un niveau de travail maximal (N₂) soit atteint en aval du système de filtration dans le sens de circulation, ou lorsqu'un niveau de travail minimal (N₃) est atteint en aval du système de filtration dans le sens de circulation, un liquide est introduit dans le circuit de circulation jusqu'à ce qu'un niveau de travail maximal (N₂) soit atteint en aval du système de filtration dans le sens de circulation.

21. Procédé selon la revendication 19 ou la revendication 20,
dans lequel, lorsqu'un niveau de sécurité (N₁) du liquide de travail est atteint en amont du système de filtration dans le sens de circulation, une opération de nettoyage du filtre est déclenchée et/ou un dépassement d'une charge admissible du filtre est affiché.
